# EUROPEAN PATENT APPLICATION

(11) **EP 4 621 934 A1**
(43) Date of publication of application: **24.09.2025**
(21) Application number: 23890122.7
(22) Date of filing: 29.05.2023
(51) Int. Cl.: H01M 10/48, H01M 50/289

(54) **BATTERY MODULE AND SAFETY EARLY-WARNING APPARATUS THEREOF**

(30) Priority: 17.11.2022 CN 202223092450 U
(71) Applicant: Sungrow Power Supply Co., Ltd., Hefei, Anhui 230088 (CN)
(72) Inventor: LI, Panpan, Hefei, Anhui 230088 (CN); XU, Erchao, Hefei, Anhui 230088 (CN); DONG, Puyun, Hefei, Anhui 230088 (CN); DAI, Haodong, Hefei, Anhui 230088 (CN); DING, Huaidong, Hefei, Anhui 230088 (CN)
(74) Representative: Zacco Norway AS
(86) International application number: PCT/CN2023/096773
(87) International publication number: WO 2024/103679

(57) **Abstract**

Disclosed in the present invention are a battery module and a safety early-warning apparatus thereof. The safety early-warning apparatus comprises a flexible filling layer, a pressure sensor and an early-warning unit, wherein the flexible filling layer is filled in a gap between any two adjacent battery cells in a battery module; the pressure sensor is embedded in the flexible filling layer to be configured to measure a pressure value between two adjacent battery cells; and the early-warning unit is in communication connection with the pressure sensor, so as to send out early-warning information when the pressure value measured by the pressure sensor exceeds a preset value. In the safety early-warning apparatus, when a pressure value measured by a pressure sensor exceeds a preset value, an early-warning unit can send out early-warning information, so as to warn a user that a battery module has potential safety hazards; in addition, since the pressure sensor is embedded in a flexible filling layer, the reliability and stability of installation of the pressure sensor can be ensured, thereby avoiding the problem of the measurement sensitivity and accuracy being reduced due to misplacement or measurement position inclination, etc., of the pressure sensor.

## Description

The present application claims the priority to China Patent Application No. 202223092450.7, titled "BATTERY MODULE AND SAFETY EARLY-WARNING APPARATUS THEREOF", filed on November 17, 2022 with the China National Intellectual Property Administration, which is incorporated herein by reference in its entirety.

### FIELD

The present disclosure relates to the technical field of batteries, and in particular to a battery module and a safety warning apparatus for a battery module.

### BACKGROUND

Lithium ion batteries, as a new type of green energy, are rapidly developed and applied in various fields such as automobiles, energy storage, aerospace, and handheld electronic devices. In practical applications, lithium ion battery cells are connected in different series and parallel ways to form battery modules to provide electrical energy for terminal products. During the usage of the battery modules, expansion of battery cells is caused by factors such as expansion of battery materials, thickening of SEI films, gas generation and lithium deposition. Excessive expansion may results in rapid deterioration of service life of the battery cells and safety issues with battery modules.

In summary, how to solve the safety hazards in battery modules is a problem urgently to be solved by those skilled in the art.

### SUMMARY

In view of the above problems, a battery module and a safety warning apparatus for a battery module are provided according to the present disclosure, to solve the problem of safety hazards in battery modules.

To achieve the above objectives, the following solutions are provided according to the present disclosure.

A safety warning apparatus for a battery module is provided according to the present disclosure. The safety warning apparatus includes: a flexible filling layer, one or more pressure sensors, and a warning unit. The flexible filling layer is configured to fill a gap between two adjacent battery cells in the battery module. The pressure sensor is embedded in the flexible filling layer and is configured to detect a pressure between the two adjacent battery cells. The warning unit is configured to communicate with the pressure sensors and issue warning information when the pressure detected by any one of the pressure sensors exceeds a predetermined value.

In an embodiment, the flexible filling layer is made of a phase change material.

In an embodiment, the flexible filling layer is made of a thermal insulation material.

In an embodiment, in a case that the flexible filling layer is embedded with more than one pressure sensors, at least two of the pressure sensors are arranged at diagonal positions in the flexible filling layer.

In an embodiment, in a case that the flexible filling layer is embedded with more than one pressure sensors, at least one of the pressure sensors is arranged at a center position in the flexible filling layer.

In an embodiment, the flexible filling layer includes a flexible layer and a rigid layer that are composited along a thickness direction of the flexible filling layer, and the rigid layer is adapted to a compression limit thickness of the pressure sensor.

In an embodiment, the flexible layer includes a first flexible composite layer and a second flexible composite layer that are respectively composited on two opposite surfaces of the rigid layer.

In an embodiment, the warning unit includes an alarm device. The alarm device is configured to trigger an alarm when the pressure detected by the pressure sensor exceeds the predetermined value.

In an embodiment, the warning unit includes a display device. The display device is configured to display a service life of the battery module.

Compared to content described in the background technology, the safety warning apparatus for a battery module includes: a flexible filling layer, a pressure sensor, and a warning unit. The flexible filling layer is configured to fill a gap between two adjacent battery cells in the battery module. The pressure sensor is embedded in the flexible filling layer and is configured to detect a pressure between the two adjacent battery cells. The warning unit is configured to communicate with the pressure sensor and issue warning information when the pressure detected by the pressure sensor exceeds a predetermined value. With the safety warning apparatus, in practical applications, the pressure sensor may detect the pressure between two adjacent battery cells. When a battery cell (that is, a cell) expands, the pressure detected by the pressure sensor changes. When the pressure exceeds a predetermined value, the warning unit communicated with the pressure sensor may issue warning information to remind the user that there is a safety hazard in the battery module, so that the user may take timely protective measures. In addition, the gap between two adjacent battery cells is filled with the flexible filling layer and the pressure sensor is embedded in the flexible filling layer, so that the pressure sensor is reliably and stably installed, thereby avoiding the problem of reduced sensitivity and reduced accuracy of the pressure sensor due to misalignment or tilted detection positions.

A battery module is further provided according to the present disclosure. The battery module includes a safety warning apparatus which is the safety warning apparatus for a battery module described in any one of the above embodiments. Due to the aforementioned technical effects of the safety warning apparatus, the battery module including the safety warning apparatus also have the corresponding technical effects, which are not repeated herein.

### BRIEF DESCRIPTION OF THE DRAWINGS

In order to clearly illustrate technical solutions in the embodiments of the present disclosure or in the conventional technology, the drawings used in the description of the embodiments or the conventional technology are briefly described below. It is apparent that the drawings in the following description show only some embodiments of the present disclosure, and other drawings may be obtained by those skilled in the art based on the drawings without any creative efforts.
FIG. 1 is a schematic structural diagram of a battery module according to an embodiment of the present disclosure;
FIG. 2 is a schematic structural diagram of embedding a pressure sensor in a flexible filling layer according to an embodiment of the present disclosure; and
FIG. 3 is a schematic structural diagram of a flexible filling layer composited by a flexible layer and a rigid layer according to an embodiment of the present disclosure.

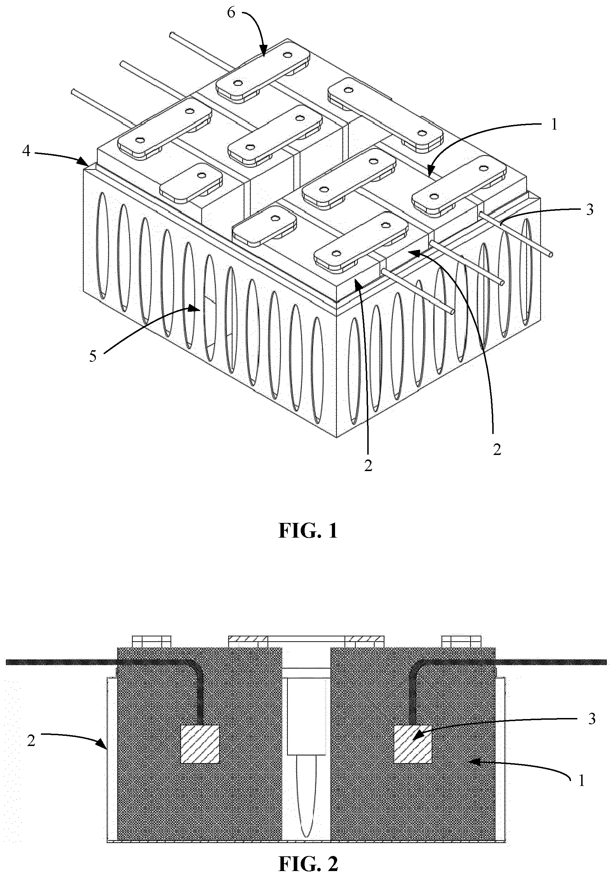

Reference numerals in FIG. 1 to FIG. 3 are listed as follows:

| | | | |
|---|---|---|---|
| 1 | Flexible filling layer | 11 | Flexible layer |
| 111 | First flexible composite layer | 112 | Second flexible composite layer |
| 2 | Battery cell | 3 | Pressure sensor |
| 4 | Battery case | 5 | Data collector |
| 6 | Connection bar | | |

### DETAILED DESCRIPTION

According to the present disclosure, a battery module and a safety warning apparatus for a battery module are provided to solve the problem of safety hazards in battery modules.

Technical solutions of embodiments of the present disclosure are clearly and completely described hereinafter in conjunction with the drawings of the embodiments of the present disclosure. Apparently, the embodiments described are only some embodiments of the present disclosure, rather than all embodiments. Based on the embodiments of the present disclosure, all other embodiments obtained by those skilled in the art without any creative effort fall within the protection scope of the present disclosure.

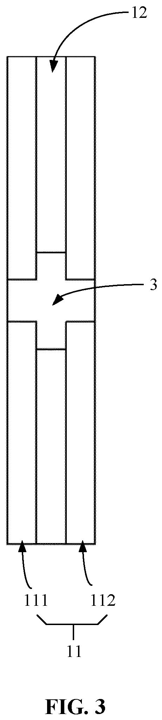

Referring to FIG. 1 to FIG. 3, FIG. 1 is a schematic structural diagram of a battery module according to an embodiment of the present disclosure, FIG. 2 is a schematic structural diagram of embedding a pressure sensor in a flexible filling layer according to an embodiment of the present disclosure, and FIG. 3 is a schematic structural diagram of a flexible filling layer composited by a flexible layer and a rigid layer according to an embodiment of the present disclosure.

A safety warning apparatus for a battery module is provided according to the present disclosure. The safety warning apparatus includes: a flexible filling layer 1, a pressure sensor 3 and a warning unit. The flexible filling layer 1 is configured to fill a gap between two adjacent battery cells 2 in the battery module. The pressure sensor 3 is embedded in the flexible filling layer 1 and is configured to detect a pressure between the two adjacent battery cells 2. The warning unit is configured to communicate with the pressure sensor 1 and issue warning information when the pressure detected by the pressure sensor 3 exceeds a predetermined value.

With the safety warning apparatus, in practical applications, the pressure sensor 3 may detect the pressure between two adjacent battery cells 2. When a battery cell 2 (that is, a cell) expands, the pressure detected by the pressure sensor 3 changes. When the pressure exceeds a predetermined value, the warning unit communicated with the pressure sensor 3 may issue warning information to remind the user that there is a safety hazard in the battery module, so that the user may take timely protective measures. In addition, the gap between two adjacent battery cells 2 is filled with the flexible filling layer 1 and the pressure sensor 3 is embedded in the flexible filling layer 1, so that the pressure sensor 3 is reliably and stably installed, thereby avoiding the problem of reduced sensitivity and reduced accuracy of the pressure sensor 3 due to misalignment or tilted detection positions.

It should be noted that those skilled in the art should understand that the battery module generally includes a battery case 4. Multiple battery cells 2 (that is, the cells) are installed in the battery case 4. The battery cells 2 are connected in series or parallel according to requirements. Thus, a battery module is formed for providing electrical energy for a terminal product. The battery cells 2 may be electrically connected with each other by using a connection bar 6 (such as an aluminum bar). The battery case 4 may be further arranged with a data collector 5. The data collector 5 is configured to collect monitored data and upload the monitored data to a battery management and control system through a wiring harness. It should be further noted that the pressure sensor 3 may detect pressure in real time or intermittently. In the embodiments according to the present disclosure, the pressure sensor 3 detects pressure in real time, thereby performing detection accurately and timely.

In some embodiments, the flexible filling layer 1 may be made of a phase change material. The flexible filling layer 1 is made of the phase change material, so that the pressure sensor 3 is well contacted with a detection surface of the battery cell 2 to ensure the detection accuracy, and the heat generated by the battery cell 2 is absorbed and dissipated timely to meet the heat dissipation requirements between adjacent battery cells 2.

Apparently, it should be understood that the flexible filling layer 1 is made of the phase change material is only an example in the embodiment of the present disclosure. In practical applications, other flexible materials commonly used by those skilled in the art may be adopted, and the specific configuration may be determined according to the actual requirements. For example, the flexible filling layer may be made of a thermal insulation material. With the structure of the flexible filling layer 1 made of the thermal insulation material, the influence between battery cells 2 can be reduced, so that even if a battery cell 2 experience an abnormal temperature, temperatures of other battery cells 2 are not to be affected.

In some embodiments, the flexible filling layer 1 may be embedded with multiple pressure sensors 3, and at least two pressure sensors 3 are arranged at diagonal positions in the flexible filling layer 1. With the structure of the multiple pressure sensors 3 and the diagonal arrangement, the comprehensiveness of the pressure detection between two adjacent battery cells 2 can be improved, thereby avoiding missed detections caused by local expansion. It should be understood that in practical applications, the pressure sensors 3 may be arranged at four corners and a center of gravity of the flexible filling layer 1 according to actual requirements, achieving a comprehensive detection area. It should be noted that in detecting pressure with multiple pressure sensors 3, the warning unit issues warning information when any one of the pressure sensors 3 detects a pressure exceeding the predetermined value.

Apparently, it should be understood that it is not limited to multiple pressure sensors 3, and a single pressure sensors 3 may be arranged. Regardless of arranging multiple or a single pressure sensor 3, at least one pressure sensor 3 may be arranged at a center position in the flexible filling layer 1. For the structure of the battery cell 2, the strength of the battery cell 2 at the center position is weaker to the strength of the battery cell 2 at the angular positions. When expanding, the battery cell 2 at the center position deforms first. Therefore, the pressure sensor 3 is arranged at the center position, ensuring the accuracy of the detection by the pressure sensor 3.

In some embodiments, the flexible filling layer 1 may include a flexible layer 11 and a rigid layer 12 that are composited along a thickness direction of the flexible filling layer, and the rigid layer 12 is adapted to a compression limit thickness of the pressure sensor 3. With the flexible filling layer 1 having such structure, the pressure sensor 3 can be protected by the rigid layer 12, thereby preventing the pressure sensor 3 from being crushed due to excessive expansion and deformation of the battery cell 2. The rigid layer 12 may be made of an insulation resin board, and the flexible layer 11 may be made of a flexible material such as the phase change material or the thermal insulation material, which are not limited herein.

In a further embodiment, to ensure two opposite surfaces of the flexible filling layer 1 having a flexible support and fixation function, the flexible layer 11 may include a first flexible composite layer 111 and a second flexible composite layer 112, which are respectively composited on two opposite surfaces of the rigid layer 12.

In some embodiments, the warning unit may include an alarm device. The alarm device may trigger an alarm when the pressure detected by the pressure sensor 3 exceeds the predetermined value. With the alarm device, the user may promptly determine whether the battery module operates in a safe state. The alarm device may be a sound alarm, a light alarm, a sound and light alarm, or a message alarm. For example, terminal devices such as mobile phones and computers may receive alarm information. In practical applications, the alarm device may be configured according to actual requirements, which is not limited herein.

In some embodiments, the warning unit may further include a display device. The display device may be configured to display the service life of the battery module. Through extensive experimental and simulation tests, it is found that there is a correspondence between pressures between battery cells 2 and capacities of the battery module. Therefore, the display device is arranged to display prediction information related to the service life of the battery module for user reference.

In addition, a battery module is further provided according to the present disclosure. The battery module includes a safety warning apparatus, which is the safety warning apparatus for a battery module described in any one of the above embodiments. Due to the aforementioned technical effects of the safety warning apparatus, the battery module including the safety warning apparatus also have the corresponding technical effects, which are not repeated herein.

It should be noted that the embodiments in the specification are described in a progressive manner, each of the embodiments emphasizes the differences from others, and the same or similar parts among the embodiments may be referred to each other.

It should be understood that if "system", "device", "unit" and/or "module" are used herein, it is merely a method for distinguishing different assemblies, elements, components, portions or assembly at different levels. However, if other expressions may realize the same purpose, they may be replaced by other expressions.

As shown in the present disclosure and the claims, the words "a", "one", "one type" and/or "this" are not specifically referring to the singular, but may also include the plural, unless the context clearly indicates exceptions. Generally, the terms "include" and "comprise" only indicate that the steps and elements that have been clearly identified are included, and these steps and elements do not constitute an exclusive list. The method or apparatus may further include other steps or elements. The elements limited by the statement "comprising (including) a..." do not exclude the existence of other identical elements exist in the process, method, product or apparatus that includes the elements.

In the description of the embodiments of the present disclosure, unless otherwise specified, "/" means or. For example, A/B may represent A or B. The term "and/or" herein only indicates an association relationship between related objects, which indicating that there may be three types of relationships. For example, A and/or B may indicate that there are three cases: only A exists, both A and B exist, and only B exists. In addition, in the description of the embodiments of the present disclosure, "multiple" refers to two or more.

The terms "first", "second" and the like are only used for description, and should not be interpreted as indicating or implying relative importance or implying the number of the indicated technical features. Therefore, features defined by "first" and "second" may explicitly or implicitly include one or more of these features.

If a flowchart is used in the present disclosure, the flowchart is used to explain the operations performed by the system according to the embodiments of the present disclosure. It should be understood that the preceding or subsequent operations are not necessarily performed accurately in order. Instead, the steps may be processed in reverse order or simultaneously. In addition, other operations may be added to these processes, or one or more operations may be removed from these processes.

The principle and the embodiments of the present disclosure are illustrated herein by specific examples. The above description of the embodiments is only intended to facilitate the understanding of the core concept of the present disclosure. It should be noted that improvements and modifications may be made by those skilled in the art to the present disclosure without departing from the principle of the present disclosure, and these improvements and modifications fall within the protection scope of the claims of the present disclosure.

## Claims

1. A safety warning apparatus for a battery module, comprising:
a flexible filling layer (1), configured to fill a gap between two adjacent battery cells (2) in the battery module;
one or more pressure sensors (3), embedded in the flexible filling layer (1) and configured to detect a pressure between the two adjacent battery cells (2); and
a warning unit, configured to communicate with the pressure sensors (3) and issue warning information when the pressure detected by any one of the pressure sensors (3) exceeds a predetermined value.

2. The safety warning apparatus for a battery module according to claim 1, wherein the flexible filling layer (1) is made of a phase change material.

3. The safety warning apparatus for a battery module according to claim 1, wherein the flexible filling layer (1) is made of a thermal insulation material.

4. The safety warning apparatus for a battery module according to claim 1, wherein in a case that the flexible filling layer (1) is embedded with more than one pressure sensors (3), at least two of the pressure sensors (3) are arranged at diagonal positions in the flexible filling layer (1).

5. The safety warning apparatus for a battery module according to claim 1, wherein in a case that the flexible filling layer (1) is embedded with more than one pressure sensors (3), at least one of the pressure sensors (3) is arranged at a center position in the flexible filling layer (1).

6. The safety warning apparatus for a battery module according to claim 1, wherein the flexible filling layer (1) comprises a flexible layer (11) and a rigid layer (12) that are composited along a thickness direction of the flexible filling layer, and the rigid layer (12) is adapted to a compression limit thickness of the pressure sensor (3).

7. The safety warning apparatus for a battery module according to claim 6, wherein the flexible layer (11) comprises a first flexible composite layer (111) and a second flexible composite layer (112) that are respectively composited on two opposite surfaces of the rigid layer (12).

8. The safety warning apparatus for a battery module according to claim 1, wherein the warning unit comprises an alarm device, and the alarm device is configured to trigger an alarm when the pressure detected by the pressure sensor (3) exceeds the predetermined value.

9. The safety warning apparatus for a battery module according to claim 1, wherein the warning unit comprises a display device, and the display device is configured to display a service life of the battery module.

10. A battery module, comprising a safety warning apparatus, wherein
the safety warning apparatus is the safety warning apparatus for a battery module according to any one of claims 1 to 9.
